# EUROPÄISCHE PATENTSCHRIFT

(11) **EP 2 020 353 B1**
(45) Veröffentlichungstag und Bekanntmachung des Hinweises auf die Patenterteilung: **27.01.2010**
(21) Anmeldenummer: 08104356.4
(22) Anmeldetag: 11.06.2008
(51) Int. Cl.: B60W 30/14, B60W 10/06, B60W 10/18

(54) **Verfahren und Vorrichtung zur Regelung der Geschwindigkeit eines Fahrzeugs**
Method and device for regulating the speed of a vehicle
Procédé et dispositif de régulation de la vitesse d'un véhicule

(30) Priorität: 30.07.2007 DE 102007035720
(43) Veröffentlichungstag der Anmeldung: 04.02.2009
(73) Patentinhaber: Robert Bosch GmbH, 70442 Stuttgart (DE)
(72) Erfinder: Kettenacker, Guenter, 71711, Steinheim (DE)

(56) Entgegenhaltungen:
- EP-A- 0 145 374
- EP-A- 0 656 276
- EP-A- 0 992 388
- EP-B- 0 715 687
- DE-A- 2 819 175
- DE-A- 4 420 116

## Beschreibung

### Stand der Technik

Die Erfindung geht von einem Verfahren und von einer Vorrichtung zur Regelung der Geschwindigkeit eines Fahrzeugs nach der Gattung der unabhängigen Ansprüche aus, mit Aktievierung einer Motorbrense, wie aus der EP 715 687 B bekannt.

Aus der DE 102 21 341 A1 ist bereits ein Verfahren und eine Vorrichtung zur Steuerung der Antriebseinheit eines Fahrzeugs bekannt, die eine Fahrgeschwindigkeitsregelung ermöglichen, bei der vom Fahrer unerwünschte Betriebszustände vermieden werden. Dabei wird eine von der Antriebseinheit abzugebende Sollgröße in Abhängigkeit einer vorgegebenen Fahrgeschwindigkeit gebildet. Die abzugebende Sollgröße wird in Abhängigkeit mindestens eines Betriebsparameters des Fahrzeugs überwacht. Dabei wird ein Sollmomentenwert im Sinne einer Fahrgeschwindigkeitsregelung gebildet, bei der die aktuelle Istgeschwindigkeit dem Sollgeschwindigkeitswert nachgeführt wird. Der eigentliche Sollmomentenwert wird in Abhängigkeit von erfassten Betriebsparameterwerten überwacht und gegebenenfalls begrenzt. Durch die Fahrgeschwindigkeitsregelung wird die Istgeschwindigkeit der Sollgeschwindigkeit nachgeführt.

### Vorteile der Erfindung

### Offenbarung der Erfindung

Das erfindungsgemäße Verfahren und die erfindungsgemäße Vorrichtung mit den Merkmalen der unabhängigen Ansprüche 1 und 12 haben demgegenüber den Vorteil, dass ein erster unterer Grenzwert zur Begrenzung der Ausgangsgröße nach unten vorgegeben wird, solange die Istgeschwindigkeit die Sollgeschwindigkeit um weniger als einen ersten vorgegebenen Schwellwert überschreitet und dass bei Überschreiten der Sollgeschwindigkeit durch die Istgeschwindigkeit um mehr als den ersten vorgegebenen Schwellwert der erste untere Grenzwert durch einen zweiten unteren Grenzwert zur Begrenzung der Ausgangsgröße nach unten ersetzt wird, der kleiner als der erste untere Grenzwert ist. Auf diese Weise lässt sich eine zur Zurückführung der Istgeschwindigkeit auf die Sollgeschwindigkeit erforderliche Motorbremse verzögert aktivieren und damit eine Hysterese für die Aktivierung der Motorbremse realisieren. Dies ist besonders dann von Vorteil, wenn ein Motorbremsmoment nicht kontinuierlich über den vollen Arbeitsbereich eingestellt, sondern nur zwischen zwei Grenzwerten geregelt und andernfalls nicht eingestellt werden kann. Eine unkomfortable Einstellung der Fahrgeschwindigkeit mit einem 2-Punkt-Reglerverhalten wenn genau das nicht einstellbare Bremsmoment notwendig wäre, kann auf diese Weise verhindert werden. Ein zu häufiges Ein- und Ausschalten der Motorbremse kann auf diese Weise verhindert werden.

Durch die in den Unteransprüchen aufgeführten Maßnahmen sind vorteilhafte Weiterbildungen und Verbesserungen des im Anspruch 1 angegebenen Verfahrens möglich.

Vorteilhaft ist, wenn als erster unterer Grenzwert ein minimaler ohne Aktivierung einer Motorbremse einstellbarer Wert für die Ausgangsgröße vorgegeben wird. Auf diese Weise wird eine Aktivierung der Motorbremse wirksam vermieden, solange die Istgeschwindigkeit die Sollgeschwindigkeit nicht mehr als den ersten vorgegebenen Schwellwert überschreitet.

Vorteilhaft ist auch, wenn als zweiter unterer Grenzwert ein minimaler mit Aktivierung einer Motorbremse einstellbarer Wert für die Ausgangsgröße vorgegeben wird. Auf diese Weise wird sichergestellt, dass bei Überschreiten der Sollgeschwindigkeit durch die Istgeschwindigkeit um mehr als den ersten vorgegebenen Schwellwert die maximale Motorbremswirkung zur Verfügung steht.

Ein weiterer Vorteil ergibt sich, wenn der erste untere Grenzwert nur dann durch den zweiten unteren Grenzwert ersetzt wird, wenn die Ausgangsgrößen den ersten unteren Grenzwert erreicht hat. Auf diese Weise wird die Aktivierung der Motorbremse weitestmöglich hinausgezögert und damit eine maximale Hysteresewirkung erzielt.

Besonders vorteilhaft ist es, wenn bei Vorgabe des zweiten unteren Grenzwertes zur Begrenzung der Ausgangsgröße nach unten zunächst ein erster oberer Grenzwert zur Begrenzung der Ausgangsgröße nach oben größer als der erste untere Grenzwert vorgegeben wird, solange die Ausgangsgröße einen zweiten oberen Grenzwert überschreitet, der zwischen dem ersten unteren Grenzwert und dem zweiten unteren Grenzwert liegt, und dass bei Unterschreiten des zweiten oberen Grenzwertes durch die Ausgangsgröße der erste oberen Grenzwert durch den zweiten oberen Grenzwert zur Begrenzung der Ausgangsgröße nach oben ersetzt wird. Auf diese Weise wird verhindert, dass ein aktivierter Motorbremsbetrieb vorzeitig verlassen wird. Auch auf diese Weise wird ein zu häufiges Einschalten und Ausschalten des Motorbremsbetriebes verhindert.

Vorteilhaft ist weiterhin, wenn der zweite obere Grenzwert durch den ersten oberen Grenzwert ersetzt wird, wenn die Istgeschwindigkeit die Sollgeschwindigkeit, insbesondere um mehr als einen zweiten vorgegebenen Schwellwert, wieder unterschreitet. Auf diese Weise wird ein Verlassen des Motorbremsbetriebes bei Wiederunterschreiten der Istgeschwindigkeit unter die Sollgeschwindigkeit verzögert freigegeben und auf diese Weise im Sinne einer Hysterese ein zu häufiges Ein- und Ausschalten der Motorbremse verhindert.

Vorteilhaft ist dabei, wenn der zweite obere Grenzwert nur dann durch den ersten oberen Grenzwert ersetzt wird, wenn die Ausgangsgröße den zweiten oberen Grenzwert wieder erreicht hat. Auf diese Weise wird die verzögerte Freigabe des Verlassens des Betriebszustandes der aktivierten Motorbremse noch zuverlässiger erteilt.

Ein weiterer Vorteil ergibt sich, wenn als erster oberer Grenzwert ein im Volllastbetriebszustand maximal einstellbarer Wert für die Ausgangsgröße vorgegeben wird. Dies ermöglicht vor allem für Istgeschwindigkeiten unterhalb der Sollgeschwindigkeit eine Nachführung der Istgeschwindigkeit an die Sollgeschwindigkeit mit minimalem Verzug.

Ein weiterer Vorteil ergibt sich, wenn als zweiter oberer Grenzwert ein bei aktivierter Motorbremse maximal einstellbarer Wert für die Ausgangsgröße vorgegeben wird. Auf diese Weise wird für den Betriebszustand der aktivierten Motorbremse einerseits der maximal mögliche Arbeitsbereich der Motorbremse ausgenutzt, und zum anderen verhindert, dass der Betriebszustand der aktivierten Motorbremse verlassen wird, bevor die Istgeschwindigkeit die Sollgeschwindigkeit wieder unterschreitet. Auf diese Weise wird ein zu häufiges Ein- und Ausschalten der Motorbremse verhindert.

Ein weiterer Vorteil ergibt sich, wenn der zweite untere Grenzwert durch einen dritten unteren Grenzwert größer oder gleich dem ersten unteren Grenzwert ersetzt wird, wenn die Ausgangsgröße den dritten unteren Grenzwert erreicht oder überschreitet. Auf diese Weise wird sichergestellt, dass mit Unterschreiten der Istgeschwindigkeit unter die Sollgeschwindigkeit der Betriebszustand der aktivierten Motorbremse verlassen wird und damit ein Nachführen der Istgeschwindigkeit an die Sollgeschwindigkeit nicht verhindert oder erschwert wird.

Vorteilhaft ist dabei, wenn als dritter unterer Grenzwert ein Neutralwert, insbesondere der Wert Null vorgegeben wird. Auf diese Weise wird für den Fall, dass die Istgeschwindigkeit die Sollgeschwindigkeit unterschreitet, sichergestellt, dass die Motorbremse nicht aktiviert wird. Wird für den dritten unteren Grenzwert gar der Wert Null vorgegeben, so wird auf diese Weise sichergestellt, dass für eine Istgeschwindigkeit kleiner als die Sollgeschwindigkeit kein negativer Wert für die Ausgangsgröße vorgegeben werden kann, so dass eine Nachführung der Istgeschwindigkeit an die Sollgeschwindigkeit gewährleistet wird.

### Zeichnung

Ein Ausführungsbeispiel der Erfindung ist in der Zeichnung dargestellt und in der nachfolgenden Beschreibung näher erläutert. Es zeigen:
- Figur 1: ein Funktionsdiagramm zur Erläuterung der erfindungsgemäßen Vorrichtung,
- Figur 2: einen Ablaufplan für einen beispielhaften Ablauf des erfindungsgemäßen Verfahrens und
- Figur 3: einen Sollmomentenstrahl.

### Beschreibung des Ausführungsbeispiels

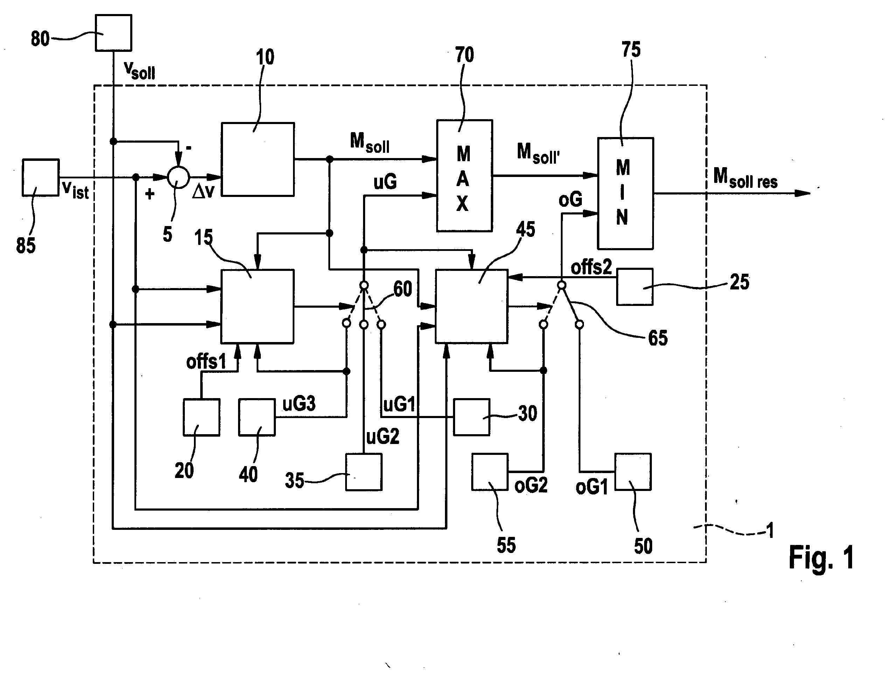

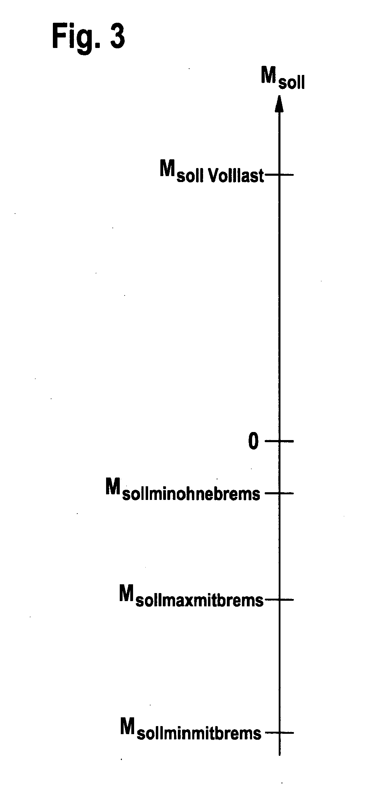

In Figur 1 kennzeichnet 1 eine erfindungsgemäße Vorrichtung zur Regelung der Geschwindigkeit eines Fahrzeugs, die beispielsweise software- und/oder hardwaremäßig in eine Motorsteuerung des Fahrzeugs implementiert sein kann. Die Vorrichtung 1 kann aber, wie in Figur 1 dargestellt, auch als eigenständiges Steuergerät zur Regelung der Geschwindigkeit des Fahrzeugs ausgebildet sein. Der Vorrichtung 1 ist von einer Sollwertvorgabeeinheit 80 eine Sollgeschwindigkeit V-Soll zugeführt. Bei der Sollwertvorgabeeinheit 80 kann es sich beispielsweise um einen Tempomatenhebel handeln, an dem der Fahrer des Fahrzeugs in dem Fachmann bekannter Weise die Sollgeschwindigkeit V-Soll vorgeben kann. Ferner empfängt die Vorrichtung 1 von einem Geschwindigkeitssensor 85 die aktuelle Istgeschwindigkeit V-Ist des Fahrzeugs. In einem Subtraktionsglied 5 der Vorrichtung 1 wird von der Istgeschwindigkeit V-Ist die Sollgeschwindigkeit V-Soll subtrahiert. Die sich bildende Geschwindigkeitsdifferenz Δν = V-Ist-V-Soll am Ausgang des Subtraktionsgliedes 5 wird einer ersten Vorgabeeinheit 10 zugeführt. Die erste Vorgabeeinheit 10 stellt dabei einen Regler dar, der beispielsweise einen Proportional und/oder einen Integral- und/oder einen Differentialanteil umfassen kann. Der Reglerbaustein 10 erzeugt in Abhängigkeit der zugeführten Geschwindigkeitsdifferenz Δν einen Sollwert für eine Ausgangsgröße einer Antriebseinheit des Fahrzeugs derart, dass die Istgeschwindigkeit V-Ist der Sollgeschwindigkeit V-Soll angenähert bzw. nachgeführt wird. Die Antriebseinheit kann beispielsweise eine Brennkraftmaschine oder einen Elektromotor oder einen Hybridantrieb aus Brennkraftmaschine und Elektromotor umfassen. Bei der Ausgangsgröße kann es sich beispielsweise um ein Drehmoment, eine Leistung, im Falle der Verwendung einer Brennkraftmaschine um eine Brennraumfüllung, im Falle eines Ottomotors um einen Drosselklappenöffnungsgrad und im Falle eines Dieselmotors um eine einzuspritzende Kraftstoffmenge handeln. Im Folgenden soll beispielhaft angenommen werden, dass es sich bei der Ausgangsgröße um ein Drehmoment handelt, sodass der vom Reglerbaustein 10 gebildete Sollwert für die Ausgangsgröße ein Sollmoment Msoll ist. Bei dem Drehmoment kann es sich beispielsweise um das indizierte Drehmoment einer Brennkraftmaschine handeln. Die Umsetzung des Sollwertes Msoll für das Drehmoment der Antriebseinheit erfolgt dann in dem Fachmann bekannter Weise durch entsprechende Einstellung der Luftzufuhr und/oder der Kraftstoffzufuhr und/oder - im Falle eines Ottomotors - der Zündung. Der Sollwert Msoll für das Drehmoment, der im Folgenden auch als Solldrehmoment bezeichnet wird, wird einem Maximalauswahlglied 70 zugeführt. Er wird außerdem zusammen mit der Sollgeschwindigkeit V-Soll und der Istgeschwindigkeit V-Ist einer zweiten Vorgabeeinheit 15 zugeführt. Der zweiten Vorgabeeinheit 15 wird außerdem ein erster vorgegebener Schwellwert offs1 aus einem ersten Schwellwertspeicher 20, sowie ein dritter unterer Grenzwert uG3 von einem dritten Vorgabemodul 40 zugeführt. Die Ausgangsgröße der zweiten Vorgabeeinheit 15 steuert einen ersten gesteuerten Schalter 60 an, der wahlweise den Ausgang uG1 eines ersten Vorgabemoduls 30, den Ausgang uG2 eines zweiten Vorgabemoduls 35 oder den Ausgang uG3 des dritten Vorgabemoduls 40 mit einem weiteren Eingang uG des Maximalauswahlgliedes 70 verbindet. Dabei stellt der Ausgang des ersten Vorgabemoduls 30 einen ersten unteren Grenzwert uG1 und der Ausgang des zweiten Vorgabemoduls 35 einen zweiten unteren Grenzwert uG2 dar. Als erster unterer Grenzwert uG1 kann beispielsweise ein minimaler ohne Aktivierung einer Motorbremse beispielsweise auf einem Prüfstand für die jeweils aktuelle Betriebsituation applizierter einstellbarer Wert Msollminohnebrems für das Solldrehmoment Msoll vorgegeben werden, wie dies auch in Figur 3 dargestellt ist. Der minimale ohne Aktivierung der Motorbremse einstellbare Wert Msollminohnebrems für das Solldrehmoment Msoll ist dabei kleiner als Null. Es stellt das betragsmäßig maximale Motorbremsmoment dar, das ohne Aktivierung der Motorbremse einstellbar ist. Die Aktivierung der Motorbremse erfolgt dabei beispielsweise mit Hilfe einer so genannten Dekompressionsventilbremse in dem Fachmann bekannter Weise derart, dass ein Auslassventil eines Zylinders oder mehrerer Zylinder nach der Kompression am oberen Kolbentotpunkt geöffnet wird. Damit verpufft die in die Kompression gesteckte Arbeit als Wärme im Abgasstrang, wobei sich diese Arbeitsleistung und damit die Motorbremswirkung durch Steigerung des Ladedrucks im Falle einer aufgeladenen Brennkraftmaschine noch erhöhen lässt. Außerdem wird die Motorbremswirkung mit steigender Anzahl nach der Kompression am oberen Kolbentotpunkt geöffneter Auslassventile verschiedener Zylinder erhöht. Alternativ lässt sich die Motorbremse auch mit Hilfe einer oder mehrerer Drosselklappen im Abgasstrang realisieren, wobei diese Drosselklappen zur Aktivierung der Motorbremse in Schließrichtung betätigt werden. Das betragsmäßig maximale Motorbremsmoment Msollminohnebrems, das ohne Aktivierung der Motorbremse einstellbar ist, ist dann das minimal einstellbare Drehmoment der Antriebseinheit, das bei Vorhandensein der Dekompressionsventilbremse noch ohne Öffnen des Auslassventils eines oder mehrerer Zylinder und damit durch die Motorbremswirkung bei der aktuellen Getriebeübersetzung einstellbar ist.

Der zweite untere Grenzwert uG2 kann beispielsweise als minimaler mit Aktivierung der Motorbremse einstellbarer Wert Msollminmitbrems für das Solldrehmoment Msoll beispielsweise durch Applikation auf einem Prüfstand für die jeweilige aktuelle Betriebssituation vorgegeben werden. Dieser Wert ist als kleinstmögliches Solldrehmoment auf dem Drehmomentenstrahl in Figur 3 abgebildet und damit noch kleiner als der Wert Msollminohnebrems. Der dritte untere Grenzwert uG3 kann als Neutralwert vorgegeben werden, d. h. als Solldrehmoment, bei dem weder eine Motorbremswirkung, noch ein Vortriebsmoment vorhanden ist. Dabei kann es sich beispielsweise beim dritten unteren Grenzwert uG3 um den Wert Null handeln, der somit größer als der Wert Msollminohnebrems gemäß dem Drehmomentenstrahl in Figur 3 ist. Dabei kann das dritte Vorgabemodul 40 auch als Festwertspeicher ausgebildet sein, in dem der Wert Null für den dritten unteren Grenzwert uG3 abgelegt ist. Der Ausgang des ersten gesteuerten Schalters 60 wird dann als resultierender unterer Grenzwert uG dem Maximalauswahlglied 70 zugeführt.

Somit wird je nach Schalterstellung des ersten gesteuerten Schalters 60 als unterer Grenzwert uG entweder der erste untere Grenzwert uG1 oder der zweite untere Grenzwert uG2 oder der dritte untere Grenzwert uG3 dem Maximalauswahlglied 70 zugeführt.

In einer vereinfachten Ausführungsform kann auf das dritte Vorgabemodul 40 auch verzichtet werden und anstelle des dritten unteren Grenzwertes uG3 der erste untere Grenzwert uG1 aus dem ersten Vorgabemodul 30 verwendet werden.

Das Maximalauswahlglied 70 wählt den größeren der beiden Werte Msoll und uG aus und leitet ihn als erstes resultierendes Solldrehmoment Msoll' an ein Minimalauswahlglied 75 der Vorrichtung 1 weiter. Die Vorrichtung 1 umfasst weiterhin eine dritte Vorgabeeinheit 45, der neben der Sollgeschwindigkeit V-Soll und der Istgeschwindigkeit V-Ist auch das Signal uG am Ausgang des ersten gesteuerten Schalters 60 und das Solldrehmoment Msoll zugeführt sind. Ferner ist der dritten Vorgabeeinheit 45 von einem fünften Vorgabemodul 55 ein zweiter oberer Grenzwert uG2 und von einem zweiten Schwellwertspeicher 25 ein zweiter vorgegebener Schwellwert offs2 zugeführt. Die dritte Vorgabeeinheit 45 bildet ein Ausgangssignal, abhängig von den genannten Eingangsgrößen zur Ansteuerung eines zweiten gesteuerten Schalters 65, der wahlweise den Ausgang uG1 eines vierten Vorgabemoduls 50 oder den zweiten oberen Grenzwert uG2 des fünften Vorgabemoduls 55 als oberen Grenzwert oG an das Minimalauswahlglied 75 weiterleitet. Das Ausgangssignal oG1 des vierten Vorgabemoduls 50 stellt dabei einen ersten oberen Grenzwert dar. Dabei kann als erster oberer Grenzwert oG1 beispielsweise ein im Volllastbetriebszustand maximal einstellbarer Wert Msollvolllast für das Solldrehmoment Msoll vorgegeben werden. Dieses kann abhängig vom aktuellen Betriebszustand, beispielsweise von der aktuellen Motordrehzahl und der aktuellen Motorlast der Antriebseinheit durch das vierte Vorgabemodul 50 vorgegeben werden, wobei der Zusammenhang zwischen dem im Volllastbetriebszustand maximal einstellbarem Wert Msollvolllast, der Motordrehzahl und der Motorlast beispielsweise auf einem Prüfstand appliziert werden kann. Gemäß Figur 3 ist der im Volllastbetriebszustand maximal einstellbare Wert Msollvolllast größer als Null und stellt das im aktuellen Betriebszustand maximal einstellbare Solldrehmoment dar.

Als zweiter oberer Grenzwert oG2 kann vom fünften Vorgabemodul 55 beispielsweise ein bei aktivierter Motorbremse, beispielsweise auf einem Prüfstand für die jeweilige aktuelle Betriebssituation applizierter maximal einstellbarer Wert Msollmaxmitbrems für das Solldrehmoment vorgegeben werden. Dieser Wert liegt dann zwischen den Werten Msollminohnebrems und Msollminmitbrems, wie auch in Figur 3 auf dem Drehmomentenstrahl ersichtlich ist.

Am Ausgang des zweiten gesteuerten Schalters 65 liegt dann je nach Schalterstellung als resultierender oberer Grenzwert oG entweder der erste obere Grenzwert oG1 oder der zweite obere Grenzwert oG2 am Eingang des Minimalauswahlgliedes 75 an. Das Minimalauswahlglied 75 wählt den kleineren der beiden Werte Msoll' und oG aus und leitet ihn als insgesamt resultierendes Solldrehmoment Msollres zur Umsetzung mit Luftzufuhr, Kraftstoffzufuhr und/oder gegebenenfalls Zündung an entsprechende Module in der Vorrichtung 1 oder einer von der Vorrichtung 1 getrennten Steuereinheit weiter.

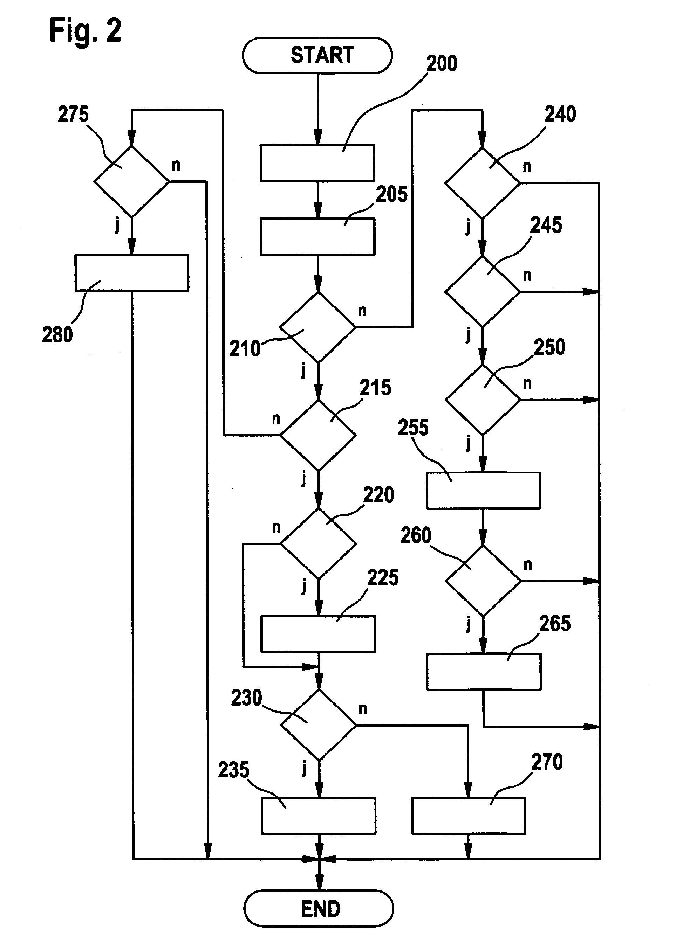

Im Folgenden wird anhand des Ablaufplans nach Figur 2 die Ansteuerung des ersten gesteuerten Schalters 60 und des zweiten gesteuerten Schalters 65 durch die zweite Vorgabeeinheit 15 und die dritte Vorgabeeinheit 45 jeweils in Abhängigkeit derer Eingangsgrößen beispielhaft erläutert.

Nach dem Start des Programms erfolgt bei einem Programmpunkt 200 die Vorgabe der Sollgeschwindigkeit V-Soll durch die Sollwertvorgabeeinheit 80 und die Erfassung der aktuellen Istgeschwindigkeit V-Ist durch den Geschwindigkeitssensor 85. Anschließend wird zu einem Programmpunkt 205 verzweigt.

Bei Programmpunkt 205 bildet das Subtraktionsglied 5 die Geschwindigkeitsdifferenz Δν und ermittelt die erste Vorgabeeinheit bzw. der Reglerbaustein 10 abhängig von der Geschwindigkeitsdifferenz Δν das Solldrehmoment Msoll. Anschließend wird zu einem Programmpunkt 210 verzweigt.

Bei Programmpunkt 210 prüft die zweite Vorgabeeinheit 15, ob die Istgeschwindigkeit V-Ist größer als die Sollgeschwindigkeit V-Soll ist. Ist dies der Fall, so wird zu einem Programmpunkt 215 verzweigt, andernfalls wird zu einem Programmpunkt 240 verzweigt.

Bei Programmpunkt 215 prüft die zweite Vorgabeeinheit 15, ob die Istgeschwindigkeit V-Ist größer als die Summe aus der Sollgeschwindigkeit V-Soll und dem ersten vorgegebenen Schwellwert offs1 ist. Ist dies der Fall, so wird zu einem Programmpunkt 220 verzweigt, andernfalls wird zu einem Programmpunkt 275 verzweigt.

Bei Programmpunkt 220 prüft die zweite Vorgabeeinheit 15, ob sie aktuell den ersten gesteuerten Schalter 60 derart ansteuert, dass uG = uG1 oder uG = uG3 ist. Ist dies der Fall, so wird zu einem Programmpunkt 225 verzweigt, andernfalls zu einem Programmpunkt 230.

Bei Programmpunkt 225 veranlasst die zweite Vorgabeeinheit 15 den ersten gesteuerten Schalter 60 zur Verbindung des zweiten Vorgabemoduls 35 mit dem Maximalauswahlglied 70 und damit zur Vorgabe des unteren Grenzwertes uG als den zweiten unteren Grenzwert uG2. Anschließend wird zu einem Programmpunkt 230 verzweigt.

Bei Programmpunkt 230 prüft die dritte Vorgabeeinheit 45, ob das Solldrehmoment Msoll kleiner als der zweite obere Grenzwert oG2 ist. Ist dies der Fall, so wird zu einem Programmpunkt 235 verzweigt, andernfalls zu einem Programmpunkt 270.

Bei Programmpunkt 235 veranlasst die dritte Vorgabeeinheit 45 den zweiten gesteuerten Schalter 65 zur Verbindung des Ausgangs des fünften Vorgabemoduls 55 mit dem Minimalauswahlglied 75, so dass der obere Grenzwert oG als zweiter oberer Grenzwert oG2 gewählt wird. Anschließend wird das Programm verlassen.

Bei Programmpunkt 270 veranlasst die dritte Vorgabeeinheit 45 den zweiten gesteuerten Schalter 65 zur Verbindung des vierten Vorgabemoduls 50 mit dem Minimalauswahlglied 75, so dass als oberer Grenzwert oG der erste obere Grenzwert oG1 verwendet wird. Anschließend wird das Programm verlassen.

Bei Programmpunkt 240 prüft die dritte Vorgabeeinheit 45, ob die Istgeschwindigkeit V-Ist kleiner als die Sollgeschwindigkeit V-Soll abzüglich des zweiten vorgegebenen Schwellwertes offs2 ist, also ob V-Ist kleiner V-Soll - offs2 ist. Ist dies der Fall, so wird zu einem Programmpunkt 245 verzweigt, andernfalls wird das Programm verlassen.

Bei Programmpunkt 245 prüft die dritte Vorgabeeinheit 45, ob der zweite gesteuerte Schalter 65 aktuell derart angesteuert ist, dass als oberer Grenzwert oG der zweite obere Grenzwert oG2 verwendet wird. Ist dies der Fall, so wird zu einem Programmpunkt 250 verzweigt, andernfalls wird das Programm verlassen.

Bei Programmpunkt 250 prüft die dritte Vorgabeeinheit 45, ob das Solldrehmoment Msoll größer oder gleich dem oberen Grenzwert oG und damit größer oder gleich dem zweiten oberen Grenzwert oG2 ist. Ist dies der Fall, so wird zu einem Programmpunkt 255 verzweigt, andernfalls wird das Programm verlassen.

Bei Programmpunkt 255 steuert die dritte Vorgabeeinheit 45 den zweiten gesteuerten Schalter zur Verbindung des vierten Vorgabemoduls 50 mit dem Minimalauswahlglied 75 an, so dass der obere Grenzwert oG gleich dem ersten oberen Grenzwert oG1 gesetzt wird. Anschließend wird zu einem Programmpunkt 260 verzweigt.

Bei Programmpunkt 260 prüft die zweite Vorgabeeinheit 15, ob das Solldrehmoment Msoll größer oder gleich dem dritten unteren Grenzwert uG3 ist. Ist dies der Fall, so wird zu einem Programmpunkt 265 verzweigt, andernfalls wird das Programm verlassen.

Bei Programmpunkt 265 veranlasst die zweite Vorgabeeinheit 15 den ersten gesteuerten Schalter 60 zur Verbindung des dritten Vorgabemoduls 40 mit dem Maximalauswahlglied 70, so dass als unterer Grenzwert uG der dritte untere Grenzwert uG3 gewählt wird. Anschließend wird das Programm verlassen.

Bei Programmpunkt 275 prüft die zweite Vorgabeeinheit 15, ob der erste gesteuerte Schalter 60 aktuell derart angesteuert ist, dass als unterer Grenzwert uG gerade der dritte untere Grenzwert uG3 vorgegeben ist. Ist dies der Fall, so wird zu einem Programmpunkt 280 verzweigt, andernfalls wird das Programm verlassen.

Bei Programmpunkt 280 veranlasst die zweite Vorgabeeinheit 15 den ersten gesteuerten Schalter 60 zur Verbindung des ersten Vorgabemoduls 30 mit dem Maximalauswahlglied 70, so dass als unterer Grenzwert uG der erste untere Grenzwert uG1 vorgegeben wird. Anschließend wird das Programm verlassen.

Die Vorgabe des ersten unteren Grenzwertes uG1 seitens des ersten Vorgabemoduls 30 und des zweiten oberen Grenzwertes oG2 seitens des fünften Vorgabemoduls 55 erfolgt jeweils vor dem Aktivieren der Motorbremse. Sie wird dann solange beibehalten, bis das Solldrehmoment Msoll den Wert Null wieder überschreitet. Für einen neuerlichen Eintritt in den Motorbremsbetrieb wird dann wieder, wie beschrieben, ausgehend von der aktuellen Betriebssituation, d. h. auch ausgehend vom aktuellen Getriebegang bzw. der aktuellen Getriebeübersetzung der erste untere Grenzwert uG1 und der zweite obere Grenzwert oG2, wie beschrieben, bestimmt.

Der erste vorgegebene Schwellwert offs1 und der zweite vorgegebene Schwellwert offs2 werden als positive Werte appliziert. Dabei können der erste vorgegebene Schwellwert offs1 und der zweite vorgegebene Schwellwert offs2 jeweils als Festwert appliziert werden. Alternativ ist auch eine Applikation als fester Prozentwert von der Sollgeschwindigkeit V-Soll möglich, so dass beispielsweise der erste vorgegebene Schwellwert offs1 und/oder der zweite vorgegebene Schwellwert offs2 generell 5% von der Sollgeschwindigkeit V-Soll betragen soll. Die beiden vorgegebenen Schwellwerte offs1, offs2 können unterschiedlich, vereinfachend aber auch gleich gewählt werden. Im letzteren Fall ist nur ein einziger Schwellwertspeicher erforderlich, dessen Inhalt sowohl der zweiten Vorgabeeinheit 15, als auch der dritten Vorgabeeinheit 45 zugeführt wird.

Durch die Fahrgeschwindigkeitsregelung gemäß dem beschriebenen Ausführungsbeispiel ist es somit möglich, dass von der Fahrgeschwindigkeitsregelung als Solldrehmoment Msoll ein Motorbremsmoment angefordert wird, um auch Sollgeschwindigkeiten V-Soll, für deren Realisierung eine Motorbremsaktivierung notwendig wird, einregeln zu können. Gemäß dem Beispiel nach Figur 3 lässt sich dabei das Motorbremsmoment nicht kontinuierlich über den vollen Arbeitsbereich, sondern nur zwischen den Werten Msollmaxmitbrems und Msollminmitbrems einstellen. Solldrehmomente, in Form von Motorbremsmomenten zwischen den Werten Msollminohnebrems und Msollmaxmitbrems lassen sich hingegen nicht einstellen. Durch das erfindungsgemäße Verfahren und die erfindungsgemäße Vorrichtung wird jedoch eine Hysterese realisiert, die ein durch die Nichteinstellbarkeit des Motorbremsmomentes zwischen den Werten Msollminohnebrems und Msollmaxmitbrems bedingtes Ein- und Ausschalten der Motorbremse verhindert. Aufgrund der erfindungsgemäßen Vorrichtung und des erfindungsgemäßen Verfahrens wird somit auch für den Fall, dass als Solldrehmoment Msoll ein Wert zwischen den Werten Msollminohnebrems und Msollmaxmitbrems vom Reglerbaustein 10 vorgegeben würde, die Fahrgeschwindigkeitsregelung aufgrund der Vorgabe des unteren Grenzwertes uG und des oberen Grenzwertes oG für das Solldrehmoment Msoll in einen Bereich verlagert, in dem eine kontinuierliche Regelung ohne störendes wiederholtes Ein- und Ausschalten der Motorbremse möglich ist.

Gemäß einer Weiterbildung des Ablaufplans nach Figur 2 kann es vorgesehen sein, dass die zweite Vorgabeeinheit 15 bei Programmpunkt 215 zusätzlich prüft, ob das Solldrehmoment Msoll den aktuell gültigen unteren Grenzwert uG = uG1 erreicht hat. Die Weiterverzweigung zu Programmpunkt 220 erfolgt dann nur, wenn sowohl dieser erste untere Grenzwert uG1 vom Solldrehmoment Msoll erreicht wurde, als auch die Istgeschwindigkeit V-Ist größer als die Summe aus der Sollgeschwindigkeit V-Soll und dem ersten vorgegebenen Schwellwert offs1 ist. Andernfalls wird wie beschrieben zu Programmpunkt 275 verzweigt. Auf diese Weise wird das Aktivieren der Motorbremse weitestmöglich hinausgezögert und damit die maximale Hysteresewirkung ermöglicht.

## Patentansprüche

1. Verfahren zur Regelung der Geschwindigkeit eines Fahrzeugs, wobei eine Sollgeschwindigkeit (V-Soll) des Fahrzeugs vorgegeben, eine Istgeschwindigkeit (V-Ist) des Fahrzeugs erfasst und abhängig von der Differenz zwischen Istgeschwindigkeit (V-lst) und Sollgeschwindigkeit (V-Soll) eine Ausgangsgröße (Msoll) einer Antriebseinheit des Fahrzeugs derart vorgegeben wird, dass die Istgeschwindigkeit (V-lst) der Sollgeschwindigkeit (V-Soll) angenähert wird, **dadurch gekennzeichnet, dass** ein erster unterer Grenzwert (uG1) zur Begrenzung der Ausgangsgröße (Msoll) nach unten vorgegeben wird, solange die Istgeschwindigkeit (V-lst) die Sollgeschwindigkeit (V-Soll) um weniger als einen ersten vorgegebenen Schwellwert (offs1) überschreitet, und dass bei Überschreiten der Sollgeschwindigkeit (V-Soll) durch die Istgeschwindigkeit (V-lst) um mehr als den ersten vorgegebenen Schwellwert (offs1) der erste untere Grenzwert (uG1) durch einen zweiten unteren Grenzwert (uG2) zur Begrenzung der Ausgangsgröße (Msoll) nach unten ersetzt wird, der kleiner als der erste untere Grenzwert (uG1) ist.

2. Verfahren nach Anspruch 1, **dadurch gekennzeichnet, dass** als erster unterer Grenzwert (uG1) ein minimaler ohne Aktivierung einer Motorbremse einstellbarer Wert (Msollminohnebrems) für die Ausgangsgröße (Msoll) vorgegeben wird.

3. Verfahren nach einem der vorherigen Ansprüche, **dadurch gekennzeichnet, dass** als zweiter unterer Grenzwert (uG2) ein minimaler mit Aktivierung einer Motorbremse einstellbarer Wert (Msollminmitbrems) für die Ausgangsgröße (Msoll) vorgegeben wird.

4. Verfahren nach einem der vorherigen Ansprüche, **dadurch gekennzeichnet, dass** der erste untere Grenzwert (uG1) nur dann durch den zweiten unteren Grenzwert (uG2) ersetzt wird, wenn die Ausgangsgröße (Msoll) den ersten unteren Grenzwert (uG1) erreicht hat.

5. Verfahren nach einem der vorherigen Ansprüche, **dadurch gekennzeichnet, dass** bei Vorgabe des zweiten unteren Grenzwertes (uG2) zur Begrenzung der Ausgangsgröße (Msoll) nach unten ein erster oberer Grenzwert (oG1) zur Begrenzung der Ausgangsgröße (Msoll) nach oben größer als der erste untere Grenzwert (uG1) vorgegeben wird, solange die Ausgangsgröße (Msoll) einen zweiten oberen Grenzwert (oG2) überschreitet, der zwischen dem ersten unteren Grenzwert (uG1) und dem zweiten unteren Grenzwert (uG2) liegt, und dass bei Unterschreiten des zweiten oberen Grenzwertes (oG2) durch die Ausgangsgröße (Msoll) der erste obere Grenzwert (oG1) durch den zweiten oberen Grenzwert (oG2) zur Begrenzung der Ausgangsgröße (Msoll) nach oben ersetzt wird.

6. Verfahren nach Anspruch 5, **dadurch gekennzeichnet, dass** der zweite obere Grenzwert (oG2) durch den ersten oberen Grenzwert (oG1) ersetzt wird, wenn die Istgeschwindigkeit (V-lst) die Sollgeschwindigkeit (V-Soll), insbesondere um mehr als einen zweiten vorgegebenen Schwellwert (offs2), wieder unterschreitet.

7. Verfahren nach Anspruch 6, **dadurch gekennzeichnet, dass** der zweite obere Grenzwert (oG2) nur dann durch den ersten oberen Grenzwert (oG1) ersetzt wird, wenn die Ausgangsgröße (Msoll) den zweiten oberen Grenzwert (oG2) wieder erreicht hat.

8. Verfahren nach Anspruch 5, 6 oder 7, **dadurch gekennzeichnet, dass** als erster oberer Grenzwert (oG1) ein im Volllastbetriebszustand maximal einstellbarer Wert (Msollvolllast) für die Ausgangsgröße (Msoll) vorgegeben wird.

9. Verfahren nach einem der Ansprüche 5 bis 8, **dadurch gekennzeichnet, dass** als zweiter oberer Grenzwert (oG2) ein bei aktivierter Motorbremse maximal einstellbarer Wert (Msollmaxmitbrems) für die Ausgangsgröße (Msoll) vorgegeben wird.

10. Verfahren nach einem der vorherigen Ansprüche, **dadurch gekennzeichnet, dass** der zweite untere Grenzwert (uG2) durch einen dritten unteren Grenzwert (uG3) größer oder gleich dem ersten unteren Grenzwert (uG1) ersetzt wird, wenn die Ausgangsgröße (Msoll) den dritten unteren Grenzwert (uG3) erreicht oder überschreitet.

11. Verfahren nach Anspruch 10, **dadurch gekennzeichnet, dass** als dritter unterer Grenzwert (uG3) ein Neutralwert, insbesondere der Wert Null, vorgegeben wird.

12. Vorrichtung (1) zur Regelung der Geschwindigkeit eines Fahrzeugs, wobei Mittel (5) zur Bildung der Differenz zwischen einer vorgegebenen Sollgeschwindigkeit (V-Soll) des Fahrzeugs und einer erfassten Istgeschwindigkeit (V-lst) des Fahrzeugs vorgesehen sind, wobei erste Vorgabemittel (10) vorgesehen sind, die in Abhängigkeit der Differenz eine Ausgangsgröße (Msoll) einer Antriebseinheit des Fahrzeugs derart vorgeben, dass sich die Istgeschwindigkeit (V-lst) der Sollgeschwindigkeit (V-Soll) annähert, **dadurch gekennzeichnet, dass** zweite Vorgabemittel (15) vorgesehen sind, die einen ersten unteren Grenzwert (uG1) zur Begrenzung der Ausgangsgröße (Msoll) nach unten vorgeben, solange die Istgeschwindigkeit (V-lst) die Sollgeschwindigkeit (V-Soll) um weniger als einen ersten vorgegebenen Schwellwert (offs1) überschreitet, und dass die zweiten Vorgabemittel (15) bei Überschreiten der Sollgeschwindigkeit (V-Soll) durch die Istgeschwindigkeit (V-lst) um mehr als den ersten vorgegebenen Schwellwert (offs1) den ersten unteren Grenzwert (uG1) durch einen zweiten unteren Grenzwert (uG2) zur Begrenzung der Ausgangsgröße (Msoll) nach unten ersetzen, der kleiner als der erste untere Grenzwert (uG1) ist.

## Claims

1. Method for regulating the speed of a vehicle, wherein a setpoint speed (V-setp) of the vehicle is predefined, an actual speed (V-set) of the vehicle is sensed and an output variable (Msetp) of a drive unit of the vehicle is predefined as a function of the difference between the actual speed (V-set) and the setpoint speed (V-setp), in such a way that the actual speed (V-act) is approximated to the setpoint speed (V-setp), **characterized in that** a first lower limiting value (uG1) for limiting the output variable (Msetp) in the downward direction is predefined as long as the actual speed (V-act) exceeds the setpoint speed (V-setp) by less than a first predefined threshold value (offs1), and **in that** when the setpoint speed (V-setp) is exceeded by the actual speed (V-act) by more than the first predefined threshold value (offs1), the first lower limiting value (uG1) is replaced by a second lower limiting value (uG2) for limiting the output variable (Msetp) in the downward direction, said second lower limiting value (uG2) being smaller than the first lower limiting value (uG1).

2. Method according to Claim 1, **characterized in that** a minimum value (Msetpminwithoutbrake), which can be set without activating an engine brake, is predefined for the output variable (Msetp) as the first lower limiting value (uG1).

3. Method according to one of the preceding claims, **characterized in that** a minimum value (Msetpminwithbrake), which can be set with activation of an engine brake, is predefined for the output variable (Msetp) as a second lower limiting value (uG2).

4. Method according to one of the preceding claims, **characterized in that** the first lower limiting value (uG1) is replaced by the second lower limiting value (uG2) only if the output variable (Msetp) has reached the first lower limiting value (uG1).

5. Method according to one of the preceding claims, **characterized in that** when the second lower limiting value (uG2) is predefined for limiting the output variable (Msetp) in the downward direction, a first upper limiting value (oG1) for limiting the output variable (Msetp) in the upward direction is predefined with a greater value than the first lower limiting value (uG1) as long as the output variable (Msetp) exceeds a second upper limiting value (oG2) which is between the first lower limiting value (uG1) and the second lower limiting value (uG2), and **in that** when the second upper limiting value (oG2) is undershot by the output variable (Msetp), the first upper limiting value (oG1) is replaced by the second upper limiting value (oG2) for limiting the output variable (Msetp) in the upward direction.

6. Method according to Claim 5, **characterized in that** the second upper limiting value (oG2) is replaced by the first upper limiting value (oG1) if the actual speed (V-act) drops below the setpoint speed (V-setp) again, in particular by more than a second predefined threshold value (offs2).

7. Method according to Claim 6, **characterized in that** the second upper limiting value (oG2) is replaced by the first upper limiting value (oG1) only if the output variable (Msetp) has reached the second upper limiting value (oG2) again.

8. Method according to Claim 5, 6 or 7, **characterized in that** a value (Msetpfullload), which can be set to its maximum in the full load operating state, is predefined as a first upper limiting value (oG1) for the output variable (Msetp).

9. Method according to one of Claims 5 to 8, **characterized in that** a value (Msetpmaxwithbrake), which can be set to its maximum when the engine brake is activated, is predefined as a second upper limiting value (oG2).

10. Method according to one of the preceding claims, **characterized in that** the second lower limiting value (uG2) is replaced by a third lower limiting value (uG3) which is greater than or equal to the first lower limiting value (uG1) if the output variable (Msetp) reaches or exceeds the third lower limiting value (uG3).

11. Method according to Claim 10, **characterized in that** a neutral value, in particular the value zero, is predefined as a third lower limiting value (uG3).

12. Device (1) for regulating the speed of a vehicle, wherein means (5) for forming the difference between a predefined setpoint speed (V-setp) of the vehicle and a sensed actual speed (V-act) of the vehicle are provided, wherein first predefining means (10) are provided which predefine an output variable (Msetp) of a drive unit of the vehicle as a function of the difference in such a way that the actual speed (V-act) approximates to the setpoint speed (V-setp), **characterized in that** second predefining means (15) are provided which predefine a first lower limiting value (uG1) for limiting the output variable (Msetp) in the downward direction as long as the actual speed (V-act) exceeds the setpoint speed (V-setp) by less than a first predefined threshold value (offs1), and **in that** when the setpoint speed (V-setp) is exceeded by the actual speed (V-act) by more than the first predefined threshold value (offs1), the second predefining means (15) replace the first lower limiting value (uG1) by a second lower limiting value (uG2) for limiting the output variable (Msetp) in the downward direction, which second lower limiting value (uG2) is smaller than the first lower limiting value (uG1).

## Revendications

1. Procédé de régulation de la vitesse d'un véhicule, dans lequel une vitesse de consigne (V-Soll) du véhicule est prédéterminée, une vitesse effective (V-Ist) du véhicule est saisie et une grandeur de sortie (Msoll) d'une unité d'entraînement du véhicule est prédéterminée en fonction de la différence entre la vitesse effective (V-Ist) et la vitesse de consigne (V-Soll), de telle sorte que la vitesse effective (V-Ist) approche la vitesse de consigne (V-Soll),
**caractérisé en ce que**
une première valeur limite inférieure (uG1) qui limite la grandeur de sortie (Msoll) vers le bas est prédéterminée tant que la vitesse effective (V-Ist) dépasse la vitesse de consigne (V-Soll) de moins qu'une première valeur de seuil prédéterminée (offs1) et
**en ce que** lorsque la vitesse de consigne (V-Soll) est dépassée par la vitesse effective (V-Ist) de plus que la première valeur de seuil prédéterminée (offs1), la première valeur limite inférieure (uG1) est remplacée par une deuxième valeur limite inférieure (uG2) qui limite davantage la grandeur de sortie (Msoll) vers le bas et qui est inférieure à la première valeur limite inférieure (uG1).

2. Procédé selon la revendication 1, **caractérisé en ce que** comme première valeur limite inférieure (uG1), une valeur minimale (Msollminohnebrems) qui peut être établie sans activer le frein moteur est prédéterminée pour la grandeur de sortie (Msoll).

3. Procédé selon l'une des revendications précédentes, **caractérisé en ce que** comme deuxième valeur limite inférieure (uG2), une valeur minimale (Msollminmitbrems) qui peut être établie avec activation du frein moteur est prédéterminée pour la grandeur de sortie (Msoll).

4. Procédé selon l'une des revendications précédentes, **caractérisé en ce que** la première valeur limite inférieure (uG1) n'est remplacée par la deuxième valeur limite inférieure (uG2) que si la grandeur de sortie (Msoll) a atteint la première valeur limite inférieure (uG1).

5. Procédé selon l'une des revendications précédentes, **caractérisé en ce que** lors de la définition de la deuxième valeur limite inférieure (uG2) qui limite la grandeur de sortie (Msoll) vers le bas, une première valeur limite supérieure (oG1) qui limite la grandeur de sortie (Msoll) vers le haut et qui est supérieure à la première valeur limite inférieure (uG1) est prédéterminée tant que la grandeur de sortie (Msoll) dépasse une deuxième valeur limite supérieure (oG2) située entre la première valeur limite inférieure (uG1) et la deuxième valeur limite inférieure (uG2) et **en ce que** lorsque la deuxième valeur limite supérieure (oG2) n'est pas dépassée par la grandeur de sortie (Msoll), la première valeur limite supérieure (oG1) est remplacée par la deuxième valeur limite supérieure (oG2) pour limiter la grandeur de sortie (Msoll) vers le haut.

6. Procédé selon la revendication 5, **caractérisé en ce que** la deuxième valeur limite supérieure (oG2) est remplacée par la première valeur limite supérieure (oG1) lorsque la vitesse effective (V-Ist) dépasse de nouveau la valeur de consigne (V-Soll), en particulier de plus qu'une deuxième valeur de seuil prédéterminée (offs2).

7. Procédé selon la revendication 6, **caractérisé en ce que** la deuxième valeur limite supérieure (oG2) n'est remplacée par la première valeur limite supérieure (oG1) que si la grandeur de sortie (Msoll) a de nouveau atteint la deuxième valeur limite supérieure (oG2).

8. Procédé selon les revendications 5, 6 ou 7, **caractérisé en ce que** comme première valeur limite supérieure (oG1), une valeur maximale (Msollvolllast) de la grandeur de sortie (Msoll) qui peut être établie en conditions de fonctionnement à pleine charge est prédéterminée.

9. Procédé selon l'une des revendications 5 à 8, **caractérisé en ce que** comme deuxième valeur limite supérieure (oG2), une valeur maximale (Msollmaxmitbrems) qui peut être activée lors de l'activation du frein moteur est prédéterminée pour la grandeur de sortie (Msoll).

10. Procédé selon l'une des revendications précédentes, **caractérisé en ce que** la deuxième valeur limite inférieure (uG2) est remplacée par une troisième valeur limite inférieure (uG3) supérieure ou égale à la première valeur limite inférieure (uG1) lorsque la grandeur de sortie (Msoll) atteint ou dépasse la troisième valeur limite inférieure (uG3).

11. Procédé selon la revendication 10, **caractérisé en ce qu'**une valeur neutre et en particulier la valeur zéro est prédéterminée comme troisième valeur limite inférieure (uG3).

12. Dispositif (1) de régulation de la vitesse d'un véhicule, qui présente des moyens (5) qui forment la différence entre une valeur prédéterminée (V-Soll) de la vitesse de consigne du véhicule et une valeur effective saisie (V-Ist) du véhicule et des premiers moyens de définition (10) qui définissent en fonction de la différence une grandeur de sortie (Msoll) d'une unité d'entraînement du véhicule, de telle sorte que la vitesse effective (V-Ist) approche la vitesse de consigne (V-Soll),
**caractérisé en ce que**
il présente des deuxièmes moyens de définition (15) qui définissent une première valeur limite inférieure (uG1) qui limite la grandeur de sortie (Msoll) vers le bas tant que la vitesse effective (V-Ist) dépasse la vitesse de consigne (V-Soll) de moins qu'une première valeur de seuil prédéterminée (offs1) et
**en ce que** les deuxièmes moyens de définition (15) remplacent la première valeur limite inférieure (uG1) par une deuxième valeur limite inférieure (uG2) qui limite la grandeur de sortie (Msoll) vers le bas et qui est inférieure à la première valeur limite inférieure (uG1) lorsque la vitesse de consigne (V-Soll) est dépassée par la vitesse effective (V-Ist) de plus que la première valeur de seuil prédéterminée (offs1).
